# EUROPÄISCHE PATENTSCHRIFT

(11) **EP 1 165 675 B1**
(45) Veröffentlichungstag und Bekanntmachung des Hinweises auf die Patenterteilung: **27.10.2004**
(21) Anmeldenummer: 01907461.6
(22) Anmeldetag: 18.01.2001
(51) Int. Cl.: C08J 11/14, C08G 63/90, B29B 17/00

(54) **VERFAHREN ZUM WIEDERAUFBEREITEN VON PET-BESTANDTEILEN UND VORRICHTUNG ZUM DURCHFÜHREN DES VERFAHRENS**
METHOD FOR RECYCLING PET COMPONENTS AND DEVICE FOR CARRYING OUT SAID METHOD
PROCEDE DE RETRAITEMENT DE COMPOSANTS EN PET, ET DISPOSITIF POUR LA MISE EN OEUVRE DE CE PROCEDE

(30) Priorität: 24.01.2000 DE 10002682
(43) Veröffentlichungstag der Anmeldung: 02.01.2002
(73) Patentinhaber: KRONES AG, 93068 Neutraubling (DE)
(72) Erfinder: KLENK, Klaus, 24939 Flensburg (DE)
(86) Internationale Anmeldenummer: PCT/EP2001/000526
(87) Internationale Veröffentlichungsnummer: WO 2001/055250

(56) Entgegenhaltungen:
- EP-A- 0 589 642
- DE-A- 1 934 552
- DE-A- 2 357 977
- DE-A- 4 134 019
- US-A- 4 602 046
- US-A- 5 698 378
- PATENT ABSTRACTS OF JAPAN vol. 1997, no. 11, 28. November 1997 (1997-11-28) & JP 09 174029 A (MATSUSHITA ELECTRIC IND CO LTD), 8. Juli 1997 (1997-07-08)

## Beschreibung

Die Erfindung betrifft ein Verfahren gemäß dem Oberbegriff des Patentanspruchs 1 und eine vorrichtung gemäß dem Oberbegriff des Patentanspruchs 11.

In aus der Praxis bekannten PET-Wasch- und Aufbereitungsanlagen werden die PET-Flakes (gemahlene, ca. 5 bis 10 mm große Kunststoffstücke) in Waschzentrifugen oder Stufenreinigern unter Zugabe relativ geringer Mengen von Wasser mit hohen Drehzahlen und unter starker Friktion behandelt. Durch die bei relativ kurzer Behandlungszeit einzusetzende, sehr hohe Leistung treten starke mechanische Schäden an den Flakes auf und entstehen Kleinteile sowie gespaltene und gespleißte Flakes, was im weiteren Aufbereitungsprozess Störungen bedingen kann. Die Kleinteile müssen aufwendig ausgeschleust werden und verschlechtern die Ausbeute. Ungünstig ist ferner, dass die Oberfläche der Flakes dennoch nur oberflächlich und unbefriedigend gereinigt wird, Haftleime nicht zuverlässig entfernbar sind und in die Oberfläche eindiffundierte Fremdstoffe nicht zufriedenstellend heraus- und abgelöst werden. Diese Stoffe wären erst im weiteren Aufbereitungsprozess auf andere weise und mit hohem zusätzlichen Aufwand einigermaßen zufriedenstellend zu entfernen.

Bei einem aus EP 0 304 667 A bekannten Verfahren wird in einem Windsichter aus dem zerkleinerten Gut Feinmaterial und Papier abgeschieden, ehe die Flakes in einem mehrstufigen Fraktionswäscher von Staub und dgl. gereinigt und Etikettenreste abgelöst werden. Nach Durchlauf durch einen Waschbehälter und einen Suspensionsbehälter erfolgt eine weitere Separierung mittels einer Hydrozyklonanordnung, um den weitaus größten Teil der PET-Flakes von den übrigen Fraktionen zu trennen, und mit noch vorhandenen, relativ schweren Metallteilchen weiterzubehandeln und dann gegebenenfalls zu sortieren. Das Verfahren ist technisch außerordentlich aufwendig und kann zu einem hohen Abscheidungsgrad führen; die Endqualität der Flakes lässt dennoch zu wünschen übrig.

Bei einem aus US 5 580 905 A bekannten Verfahren zum wiederaufbereiten von unter anderem PET-Materialien enthaltenden Kunststoffabfällen wird ohne mechanische Waschbehandlung mit einer Natronlaugen-Lösung eine Aufschlämmung hergestellt und in sauerstoffarmer Umgebung bis auf die Destillationstemperatur der Polyole aufgeheizt, um Polyester-Salze zu gewinnen.

Bei einem aus DE 195 45 357 A bekannten Verfahren zur Wiederverwertung zerkleinerter Kunststoffmaterialien wird mit einer Wasserwäsche und einer Schwimm-Sink-Trennung oder einer Hydrozyklontrennung gearbeitet. Bei der Wäsche oder/und der Trennung wird ein organisches Waschmittel einer bestimmten Dichteeinstellung auf Kohlenwasserstoffbasis eingesetzt, beispielsweise eine Mineralölfraktion und/oder deren Raffinatfraktionen, gegebenenfalls mit polaren Lösungsmitteln.

Grundsätzlich ist es von der PET-Flaschenreinigung bekannt, bei erhöhter Temperatur über 20 Minuten mit einer Natronlauge enthaltenden Reinigungslösung zu arbeiten, wobei jedoch aufgrund der Empfindlichkeit der PBT-Flaschen (Spannungsrisse und Schrumpfen) limitierte obere Grenzwerte für die Konzentration der Reinigungslösung, die Behandlungstemperatur und vor allem die Behandlungszeit einzuhalten sind, aus denen eine Reinheit resultiert, die für die Wiederverarbeitung von PET-Flakes zu neuen Flaschen zu gering wäre.

Schließlich ist aus US 4 602 046 A bereits ein gattungsgemäßes Verfahren und eine gattungsgemäße Vorrichtung bekannt, bei dem bzw. in der im Anschluss an die 30-minütige Behandlung im Wäscher mittels Natronlauge enthaltender Reinigungslösung bei einer von 70°C auf 83°C steigenden Temperatur die Flakes sofort von der Reinigungslösung getrennt, gespült und getrocknet werden. Eine nennenswerte Dekontamination der Flakes ist auf diese Weise nicht möglich. Die Flakes sind nur für untergeordnete Zwecke wie zur Herstellung von Fasern oder Folien, nicht dagegen zur Herstellung neuer PET-Flaschen geeignet.

Der Erfindung liegt die Aufgabe zugrunde, ein Verfahren der eingangs genannten Art und eine Vorrichtung zum Durchführen des Verfahrens anzugeben, mit denen ohne aufwendige Nach-Aufbereitungsschritte Flakes mit einer Qualität erzielbar sind, die sogar der Herstellung neuer Flaschen aus den Flakes genügen kann.

Die gestellte Aufgabe wird verfahrensgemäß mit den Merkmalen des Anspruchs 1 und vorrichtungsgemäß mit den Merkmalen des Anspruchs 11 gelöst.

Indem beim erfindungsgemäßen Verfahren die Flakes zumindest im Wäscher bei auf über 70°C erhöhter Temperatur und über mehr als 20 Minuten mit der Natronlauge enthaltenden Reinigungslösung behandelt und dabei auch mechanisch und zugleich hydraulisch bearbeitet werden, lassen sich alle auf dem Markt befindlichen Etikettenleime von den Flakes lösen. Durch die Weiterbehandlung der Flakes in einem Schwimm/Sink-Trenner mit der Natronlauge enthaltenden Reinigungslösung wird eine sehr gute Oberflächenqualität der Flakes erzielt. Durch nachfolgendes waschen in einem Intensivwäscher, und zwar ebenfalls unter Verwendung der Natronlauge enthaltenden Reinigungslösung, werden auch hartnäckige Schimmel und Beläge zuverlässig entfernt.

Es wird verfahrensgemäß und vorrichtungsgemäß zwar für die Wäsche der Flakes relativ hoher Aufwand getrieben, der jedoch durch die hohe Endqualität und Oberflächenqualität der Flakes und durch die Einsparung aufwendiger Zusatznachaufbereitungen mehr als kompensiert ist. Dies stellt eine bewusste Abkehr von herkömmlichen Aufbereitungsverfahren dar, weil besonderes Gewicht auf die Anfangsphase des Aufbereitungsverfahrens gelegt ist.

Mit einer Behandlungszeit von ca. 30 Minuten bei 80 bis 90°C werden besonders zufriedenstellende Ergebnisse erzielt. Es sind jedoch auch höhere Temperaturen möglich, insbesondere wenn unter Überdruck gearbeitet wird.

Um prozesstechnische Parameter und Erkenntnisse aus der PET-Flaschenreinigung nützen zu können, wird mit einer gegenüber der PET-Flaschenreinigung um bis zum 50 % verlängerten Behandlungszeit, einer gegenüber der bei der PET-Flaschenreinigung möglichen Behandlungstemperatur erhöhten Behandlungstemperatur und gegebenenfalls auch einer höheren Konzentration der Reinigungslösung gearbeitet.

Durch das mechanische Rühren und gleichzeitiges hydraulisches Hochdruckspritzen werden die Oberflächen der Flakes sehr intensiv gereinigt.

Dabei ist es zweckmäßig, im Wäscher bereits zu sieben und/oder zu filtrieren, oder zumindest in einer prozesstechnisch mit dem wäscher gekoppelten Nachbearbeitungsstufe. Dadurch lassen sich Etikettenteile, Fasern und Folienstücke sowie Schmutzpartikel von den Flakes trennen und aus der Waschlauge entfernen.

Zur Intensivierung der Reinigungswirkung kann der Reinigungslösung wenigstens ein Additiv zugesetzt werden.

Zweckmäßigerweise wird die Behandlung im Schwimm/Sinktrenner und im Intensivwäscher in einem Kreislauf oder Teilkreislauf durchgeführt, um eine ausreichend lange Behandlungszeit und einen erhöhten Durchsatz mit starker Reinigungswirkung zu erzielen.

Im Anschluss an die Intensivwäsche wird die Natronlauge enthaltende Reinigungslösung abgeschieden und zurückgeführt, so dass die Reinigungslösung mit relativ geringen Verlusten mehrfach eingesetzt werden kann.

Dabei ist es zweckmäßig die Konzentration der Reinigungslösung laufend zu überwachen und durch dosierte Zugabe zumindest von Natronlauge einzustellen.

Die überhöhte Behandlungstemperatur wird zweckmäßigerweise dadurch hergestellt, dass der Wäscher beheizt wird.

Die erfindungsgemäße Vorrichtung ist von vornherein ausgelegt auf eine extrem lange Behandlungszeit und hohe Behandlungstemperaturen und den Einsatz der Natronlauge enthaltenden Reinigungslösung, um die Flakes mechanisch und hydraulisch und thermisch intensiv behandeln zu können. Durch die prozesstechnische Kopplung des Sink-/Schwimmtrenners mit dem Wäscher wird auch im Trenner die heiße, Natronlauge enthaltende Reinigungslösung eingesetzt. In dem nachgesetzten Intensivwäscher, durch den die Flakes und ein Teilstrom der Reinigungslösung, z.B. durch eine Pumpe, gefördert werden; wird eine zusätzliche Oberflächenreinigung sichergestellt, bei der z.B. auch hartnäckige Schimmel und Beläge zuverlässig entfernt werden. Dabei kann zwischen dem Intensivwäscher und dem Schwimm-/Sinktrenner eine Rückführstrecke vorgesehen sein, um zumindest einen Teilkreislauf einzustellen und die notwendige Verweilzeit mit hohen Durchsatzraten ohne extrem großvolumige Behältnisse zu erreichen.

vorrichtungsgemäß enthält der Wäscher zweckmäßigerweise Siebbleche und automatische Filter, um Btikettenbestandteile, Fasern, Folienstücke und Schmutzpartikel ablösen und ausschleusen zu können.

Um eine Behandlungstemperatur zwischen etwa 80 und 90°C auch bei großem Durchsatz oder für ein großes Fassungsvermögen zumindest im wäscher aufrechtzuerhalten, ist es zweckmäßig, in der Heizeinrichtung wenigstens einen Wärmetauscher und/oder eine Direktheizung vorzusehen, wobei die Temperatur mit einer elektropneumatischen Regelung besonders feinfühlig einstellbar und haltbar ist.

Mit einer Hochdruckpumpe und Düsenstöcken erfolgt eine Hochdruckreinigung der gesamten Oberfläche der Flakes. Zweckmäßigerweise sind die Siebbleche, Filter und Düsenstöcke relativ zu mehreren Rührwerkstufen stationär angeordnet, so dass das Gemenge im Wäscher auch gleichförmig und intensiv agitiert wird.

Im Anschluss an den Intensivreiniger wird die Reinigungslösung mit der Natronlauge in einem Abscheider abgeschieden und vorhergehenden Prozessstufen wieder zugeführt. Dazu kann ein Versorgungsstrang zum Wäscher verlaufen, der zweckmäßigerweise wenigstens eine Versorgungspumpe aufweist.

In der Zuführvorrichtung sollte wenigstens eine Natronlaugen-Mess- und Dosiereinheit vorgesehen sein, die an den Versorgungsstrang angeschlossen ist oder fallweise angeschlossen wird, gegebenenfalls jedoch auch an den Schwimm-/Sinktrenner, um dort die Konzentration einstellen oder sogar individuell einstellen zu können.

Um bei Zufuhr von Natronlauge und/oder Additiven die Behandlungstemperatur vor allem im Wäscher nicht zu stören, sollte in der Dosiereinheit eine Vorheizeinrichtung vorgesehen sein.

Zweckmäßig wird nach dem Abscheiden der Reinigungslösung ein Neutralisator durchlaufen, der mit Frischwasser und einer Säure, z.B. Phosphorsäure oder CO², mit entsprechender Dosierung versorgt wird und das PBT-Material neutralisiert. Bereits dann lässt sich auch eine Säuberungsspülung mit Frischwasser vornehmen.

Zweckmäßigerweise wird auch der Schwimm-/Sink-Trenner mit Frischwasser gespeist, z.B. um eine andere Konzentration als im Wäscher einstellen oder Verluste gezielt ausgleichen zu können.

Um zumindest einen Teil möglicherweise enthaltenen Schwerguts abscheiden zu können, sollte dem Wäscher ein Schwergut-Abscheider vorgeschaltet sein.

Anhand der Zeichnung wird das erfindungsgemäße Verfahren in Verbindung mit einer Aufbereitungsvorrichtung erläutert. Es zeigen:
- Fig. 1A + B: gemeinsam betrachtet, in Form eines Blockschaltbildes eine Vorrichtung zum Aufbereiten von PET-Flakes, und
- Fig. 2: einen vergrößerten Ausschnitt der Vorrichtung von Fig. 1.

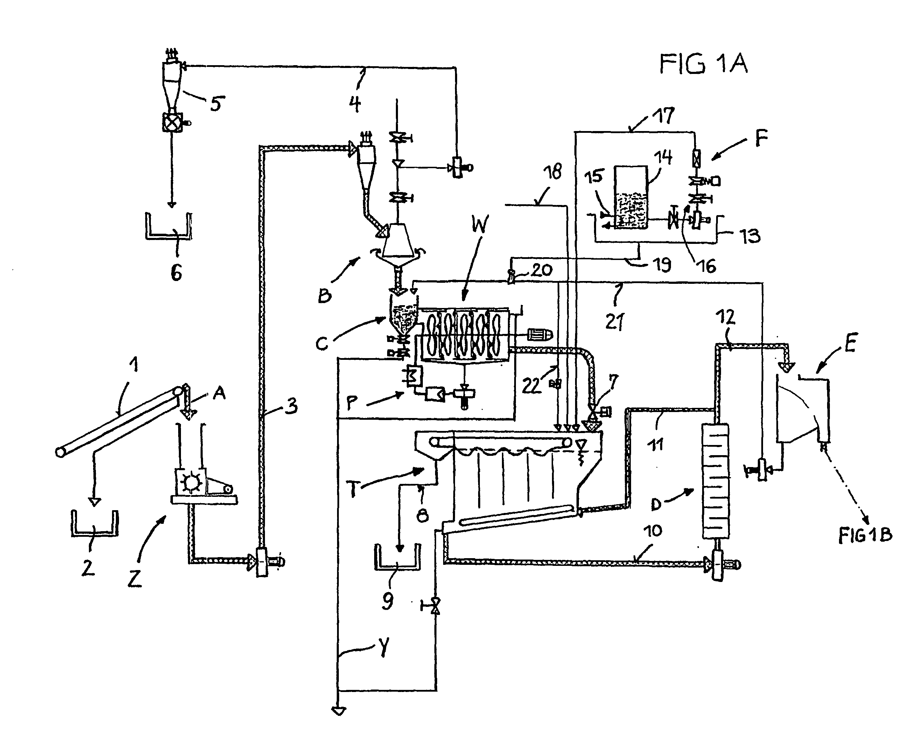

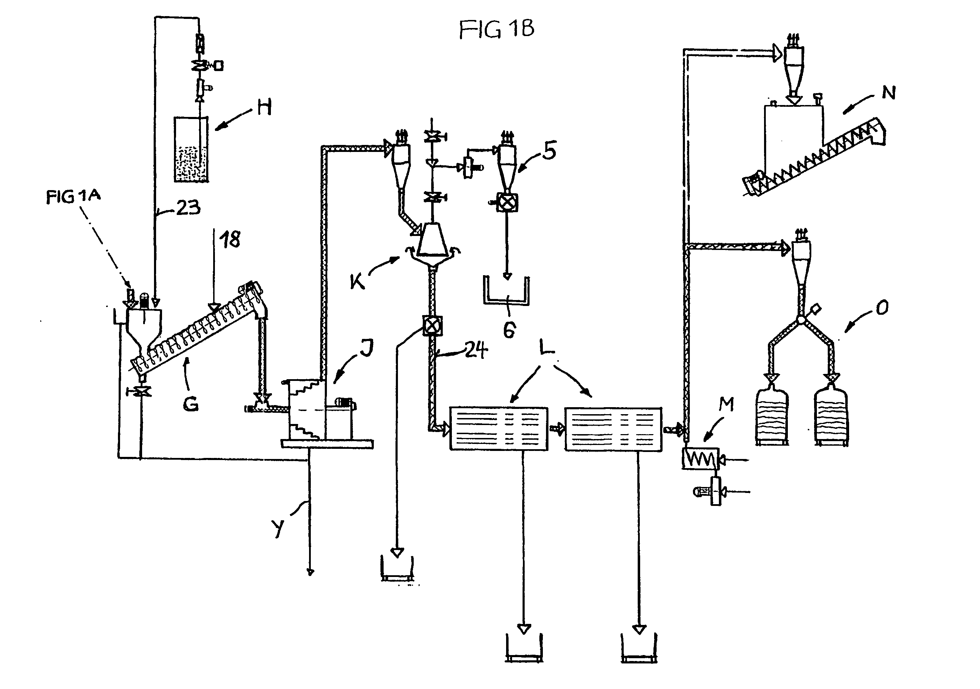

Eine Wiederaufbereitungsvorrichtung oder -anlage gemäß Fig. 1A und Fig. 1B zur Durchführung eines Aufbereitungsverfahrens von zumindest PET-Bestandteilen von Kunststoff-Getränkeflaschen weist eine Vielzahl von Stationen auf, die nachfolgend entsprechend den aufeinanderfolgenden Verfahrensschritten erläutert werden.

Die Getränkeflaschen werden über ein Förderband 1 mit zugeordnetem Metallabscheider 2 in einem Strom A in eine Schneidmühle Z (Trocken- oder Nassmühle) gefördert und gemahlen bzw. zerkleinert. Über eine Fördereinrichtung 3 (Absaug- und Fördereinrichtung) wird das Teilchengemenge einer Windsichtereinheit B zugeführt, aus der über einen Abzweigweg 4 und eine Hilfsvorrichtung 5 eine Sichtfraktion 6, insbesondere leichte Teile wie Etikettenbestandteile, Folienbestandteile und dgl. (zu ca. 80 %) und lose Schmutzteile, Staub und dgl., von PET-Bestandteilen getrennt werden. Von der Windsichtereinheit B gelangen die PET-Bestandteile (Flakes) in eine Schwergutfalle C, die einem Wäscher W zugeordnet ist. In der Schwergutfalle C werden Metall-, Glas-, Steinteile und dgl. ausgeschieden. Bereits in der Schwergutfalle C werden die Flakes mit einer Reinigungslösung aus einem Versorgungsstrang 21 vermischt, wobei die Reinigungslösung Natronlauge enthält, und gegebenenfalls passende Additive. Die Reinigungslösung hat in der Schwergutfalle C bereits überhöhte Temperatur, z.B. zwischen 80 bis 90°C. Danach durchläuft die Mischung über mehr als 20 Minuten, vorzugsweise ca. 30 Minuten, den Wäscher W. Anschließend an den Wäscher W ist ein Schwimm-/Sink-Trenner T vorgesehen, zu dem die Zufuhr über ein Absperrorgan 7 einstellbar ist. Im Schwimm-/Sink-Trenner T werden schwimmende Teile wie z.B. Flaschenverschlussbestandteile, Etiketten, Fasern, Folienbestandteile und dgl. von den PET-Flakes entfernt, wie auch PP- und PVC-Teile, die über einen Abzweig 8 bei 9 gesammelt werden. Vom Schwimm-/Sink-Trenner gelangen die PET-Flakes mit der Reinigungslösung über einen Strang 10 in wenigstens einen Intensivwäscher D, aus dem sie über einen Strang 12 in einen Flüssigkeitsabscheider E gebracht werden. Zwischen dem Strang 12 und einem unteren Einlass des Schwimm-/Sink-Trenners T ist ein Beipass 11 vorgesehen, um, falls erwünscht, zwischen dem Schwimm-/Sink-Trenner T und dem Intensivwäscher D einen Kreislauf oder Teilkreislauf einzustellen. Im Flüssigkeitsabscheider E wird die Reinigungslösung von den Flakes getrennt und über den Versorgungsstrang 21 in den Wäscher W bzw. die Schwergutfalle C zurückgefördert. Aus dem Flüssigkeitsabscheider E gelangen die PET-Flakes in einen Neutralisator G.

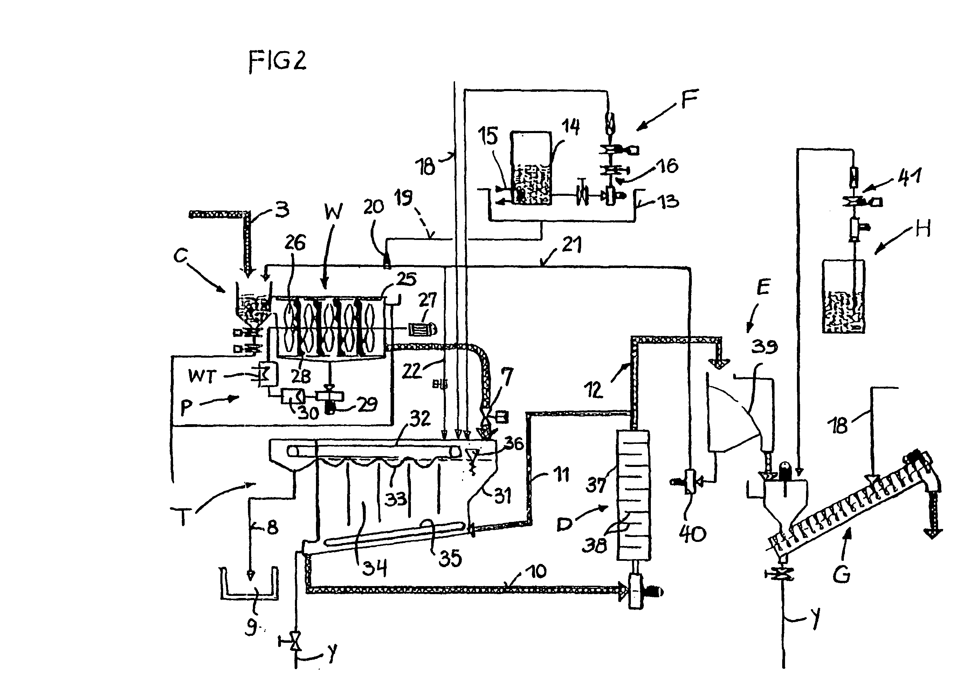

Dem Wäscher W und dem Schwimm-/Sink-Trenner T ist eine Natronlaugen-Mess- und Dosiereinheit F zugeordnet, die beispielsweise einen Natronlaugen-Behälter 14 mit einer Heizeinrichtung 15 in einem Sammelgefäß 13 aufweist, wobei das Sammelgefäß 13 über eine Anschlussleitung 19 und einen Zumischer oder Überlauf 20 an den Versorgungsstrang 21 angeschlossen ist. Die Einheit F wird vervollständigt durch mehrere Absperrorgane und gegebenenfalls einen Filter und eine Förderpumpe in einer Dosierbaugruppe 16, die über eine Leitung 17 direkt mit dem Schwimm-/Sink-Trenner T verbunden ist. Zum Schwimm-/Sink-Trenner T führt ferner eine Frischwasserleitung 18 und eine Abzweigleitung 22 mit einem Absperrorgan vom Versorgungsstrang 21. (Zum Detailaufbau des Wäschers W und der Schwimm-/Sink-Trennvorrichtung gibt die Beschreibung von Fig. 2 weitere Erläuterungen).

Der Neutralisator G (Fig. 1B), der nach Art eines Steigförderers mit einem innenliegenden Rührwerk und einem Zuführtrichter mit Rührwerk und Abwasserüberlauf ausgebildet ist, ist an die Frischwasser-Zufuhr 18 und gleichzeitig über eine Leitung 23 an eine Mess- und Dosierstation H angeschlossen, in der pH-Messungen durchführbar und Zugaben einer Neutralisiersäure (z.B. Phosphorsäure oder CO²) einstellbar sind. An den Neutralisator G schließt sich ein mechanischer Trockner J an, dem wenigstens eine weitere Windsichtereinheit K nachgeschaltet ist, aus der über Hilfseinrichtungen 5 eine Sichtfraktion 6 abgeschieden wird. In einem nachgeschalteten Metallabscheider in einem Strang 24 werden Metall- und PET-Kleinteile aus dem Flakes-Strom abgeschieden. Anschließend sind mehrere Sorter L vorgesehen, beispielsweise um bunte PET-Bestandteile und PP-Bestandteile auszusortieren, ehe in einem Nachtrockner M eine thermische Nachtrocknung der z.B. klaren PET-Flakes, z.B. mit einem indirekten Gasbrenner, erfolgt. Im Anschluss daran werden die aufbereiteten PET-Flakes entweder in einem Silo N zwischengespeichert oder in einer Packstation O verpackt. Sofern bei dem Verfahren Abwässer anfallen, oder zur Stilllegung der Vorrichtung, sind hierfür Abwasserleitungen Y vorgesehen.

Gemäß Fig. 2 weist der Wäscher W einen Behälter 25 auf, in welchem, z.B. mit horizontal liegender Rührwerkwelle, mehrere Rührstufen 26 mit Flügeln voneinander beabstandet untergebracht und durch einen Rührwerksmotor 27 angetrieben sind. Zwischen den Rührwerksstufen 26 sind stationäre Düsenstöcke 28 montiert, die aus einer Hochdruckpumpe 29 über einen Filter 30 und einen Wärmetauscher WT einer Heizeinrichtung P mit der Reinigungslösung gespeist werden. Im Behälter 25 können Siebbleche (nicht gezeigt) und automatische Filtereinrichtungen (nicht gezeigt) vorgesehen sein, um die Reinigungslösung beim Zulaufen zur Hochdruckpumpe 29 zu säubern. Mit dem Wärmetauscher WT wird im Wäscher eine bestimmte Behandlungstemperatur eingestellt und gehalten, wobei die Temperatur zwischen etwa 80 und 90°C beträgt. Eine gleichmäßige Behandlungstemperatur lässt sich beispielsweise mit einer elektropneumatischen Temperaturregelung einstellen. Anstelle des Wärmetauschers WT könnte im Behälter 25 eine Direktbeheizung (nicht gezeigt) vorgesehen sein.

Im Wäscher W werden die Flakes und gegebenenfalls noch enthaltene Kunststoffstücke mechanisch und hydraulisch durch die Rührwerkstufen 26 und eine Hochdruckspritzung aus den Düsenstöcken 28 intensiv behandelt, und zwar über eine Behandlungszeit von ca. 30 Minuten. Dabei wird die gesamte Oberfläche der Flakes intensiv gereinigt.

Im anschließenden Schwimm-/Sink-Trenner T werden schwimmende Teile entfernt. Da der Schwimm-/Sink-Trenner T verfahrentechnisch mit dem Wäscher W verbunden ist, wird auch darin mit heißer Reinigungslösung, die Natronlauge enthält, gearbeitet. Bei der langen Behandlungszeit, ebenfalls ca. 30 Minuten, ergibt sich eine außerordentlich gute Oberflächenqualität der Flakes, so dass - wenn überhaupt - nur noch eine geringe Nachaufbereitung notwendig wird. Im Schwimm-/Sink-Trenner erfolgt unter anderem eine intensive Leimlösung, wobei die Trennung in der Reinigungslösung durch unterschiedliche spezifische Gewichte des Wassers und der Lauge leichter durchzuführen ist.

Im Schwimm-/Sink-Trenner T, der einen großvolumigen Behälter 31 aufweist, können Förder- und Abscheidebänder 32, 33, Trennsektionen 34, und ein Schrägförderband 35 enthalten sein. Ferner sollte für den Schwimm-/Sink-Trenner T eine Niveauregulierung 36 für den Füllstand vorgesehen sein. Im anschließenden Intensivwäscher D, der mit einem Gehäuse 37 nach Art einer stehenden Säule mit aufsteigendem Mäander-Förderweg mit Trennsektionen 38 ausgebildet ist, wird eine zusätzliche Oberflächenreinigung der PET-Flakes sichergestellt, beispielsweise um hartnäckige Schimmel und Beläge zuverlässig zu entfernen. Gegebenenfalls wird zumindest ein Teilstrom über den Beipass 11 zurückgefördert, um z.B. den Trenner T und den Intensivwäscher D mehrfach zu nutzen. Im anschließenden Flüssigkeitsabscheider E sind beispielsweise Siebflächen 39 enthalten, die die PET-Flakes zum Einlauf des Neutralisators G gelangen lassen, hingegen die Reinigungslösung abscheiden, die von einer Versorgungspumpe 40 und den Versorgungsstrang 21 wieder in die Schwergutfalle C gebracht wird.

In der Mess- und Dosiereinheit H des Neutralisators G sind entsprechende Messeinrichtungen, Absperrorgane und Filtergruppen 41 zusammengefasst, um beispielsweise Phosphorsäure und/oder CO² entsprechend dem gemessenen pH-Wert zuzuführen. Die PET-Flakes werden im Neutralisator G unter Zugabe der Säure oder von CO² neutralisiert und in mehreren Stufen bis zuletzt mit Frischwasser sauber gespült.

In der Dosiereinheit F wird eine bestimmte Konzentration der Natronlauge in der Reinigungslösung eingestellt. Als zweckmäßig wird die Zugabe der entsprechenden Dosis in den Schwimm-/Sink-Trenner T angesehen, obwohl auch eine direkte Dosierung im Wäscher W erfolgen könnte.

Bei der PET-Flaschenreinigung hat sich eine Behandlungszeit von 20 Minuten als notwendig erwiesen, um einen Großteil der in die Oberfläche eingedrungenen Geschmacks- und Schmutzstoffe unter Verwendung einer Natronlauge enthaltenden Reinigungslösung zu entfernen. Jedoch sind bei der PET-Flaschenreinigung die Behandlungszeit und die Behandlungstemperatur nach oben dadurch begrenzt, dass Spannungsrisse und ein Schrumpfen des Materials vermieden werden müssen. Dies begrenzt auch die zulässige Konzentration der Reinigungslösung, so dass bei der PET-Flaschenreinigung z.B. auf dem Markt befindliche Etikettenleime nicht vom PET-Material zu lösen wären. Grundsätzliche Erkenntnisse aus der PET-Flaschenreinigung werden jedoch bei dem erfindungsgemäßen Verfahren zum Wiederaufbereiten von PET-Flakes eingesetzt, wobei bestimmte Verfahrensparameter im Hinblick auf eine bestimmte Endqualität der PET-Flakes gegenüber der bei der PET-Flaschenreinigung erzielbaren Reinheit deutlich nach oben gesetzt werden.

## Patentansprüche

1. Verfahren zum Wiederaufbereiten von zumindest PET-Bestandteilen aus zu einem PET-Flakes enthaltenden Teilchengemenge zerkleinerten Kunststoff-Getränkeflaschen, bei dem die Flakes in zumindest einem wäscher bei über 70°C erhöhter Temperatur und über mehr als 20 Minuten in einer Natronlauge enthaltenden Reinigungslösung mechanisch und gleich seitig hydraulisch behandelt werden, **dadurch gekennzeichnet, dass** die im Wäscher gereinigten PET-Flakes anschließend in wenigstens einem Schwimm-/Sink-Trenner ebenfalls in einer Natronlauge enthaltenden Reinigungslösung behandelt werden und die PBT-Flakes nach dem Schwimm-/Sink-Trenner in wenigstens einem Intensivwäscher in einer Natronlauge enthaltenden Reinigungslösung intensiv gewaschen werden und.

2. Verfahren nach Anspruch 1, **dadurch gekennzeichnet, dass** die Behandlungszeit im Wäscher auf ca. 20 bis 40 Minuten, vorzugsweise ca. 30 Minuten, und die Behandlungstemperatur auf ca. 75 bis 95°C, vorzugsweise auf ca. 80 bis 90°C, eingestellt werden.

3. verfahren nach Anspruch 1, **dadurch gekennzeichnet, dass** eine für die PET-Flaschenreinigung in etwa übliche Natronlauge enthaltende Reinigungslösung über eine gegenüber der bei der PET-Flaschenreinigung erheblich verlängerten, vorzugsweise um bis zu ca. 50 % verlängerten, Behandlungszeit eingesetzt wird, und dass die Behandlungstemperatur und die Konzentration der Reinigungslösung gegenüber denen bei der PET-Flaschenreinigung erhöht sind.

4. Verfahren nach Anspruch 1, **dadurch gekennzeichnet, dass** im Wäscher mechanisch gerührt und hydraulisch hochdruckgespritzt wird.

5. Verfahren nach Anspruch 1, **dadurch gekennzeichnet, dass** im Wäscher oder im Anschluss an den Wäscher gesiebt und/oder gefiltert wird.

6. Verfahren nach Anspruch 1, **dadurch gekennzeichnet, dass** der Reinigungslösung wenigstens ein Additiv zugesetzt wird.

7. Verfahren nach einem der Ansprüche 1 bis 6, **dadurch gekennzeichnet, dass** das Behandlungsgut im Schwimm-/Sink-Trenner und im anschließenden Intensivwäscher im Kreislauf oder zumindest in einem Teilkreislauf behandelt wird.

8. Verfahren nach einem der Ansprüche 1 bis 7, **dadurch gekennzeichnet, dass** anschließend an die Intensivwäsche die Natronlauge enthaltende Reinigungslösung von den Flakes abgeschieden und rückgeführt wird.

9. Verfahren nach Anspruch 1, **dadurch gekennzeichnet, dass** die Konzentration der Natronlauge enthaltenden Reinigungslösung laufend überwacht und durch dosierte Zugaben eingestellt wird.

10. verfahren nach Anspruch 1, **dadurch gekennzeichnet, dass** der Wäscher beheizt wird.

11. vorrichtung zur Wiederaufbereitung von PBT-Flakes aus zu einem Teilchengemisch zerkleinerten Getränkeflaschen, mit einem Behandlungsabschnitt, in dem zur Behandlung des Teilchengemisches mit einer Flüssigkeit wenigstens ein mechanische Rührwerke aufweisender Wäscher vorgesehen ist, dem eine zuführeinrichtung für eine Natronlauge enthaltende Reinigungslösung und eine Heizeinrichtung zugeordnet sind, wobei wenigstens ein Schwimm-/Sink-Trenner (T) vorgesehen ist, der verfahrenstechnisch mit dem Wäscher (W) gekoppelt ist, **dadurch gekennzeichnet daß** dies mit der heißen, Natronlauge enthaltenden Reinigungslösung betreibbar ist und dass dem Sink-/Schwimm-Trenner (T) wenigstens ein Intensivwäscher (D) nachgeschaltet ist.

12. Vorrichtung nach Anspruch 11, **dadurch gekennzeichnet, dass** im wäscher (w) oder in einer an den Wäscher anschließenden Behandlungsstufe Siebbleche (32, 33, 35) und automatische Filter (30) vorgesehen sind.

13. Vorrichtung nach Anspruch 11, **dadurch gekennzeichnet, dass** die Heizeinrichtung (P) wenigstens einen Wärmetauscher (WT) und/oder eine Direktheizung, vorzugsweise mit elektropneumatischer Regelung zur Einhaltung einer zwischen 70 und 95°C, vorzugsweise etwa zwischen 80 und 90°C, liegenden Behandlungstemperatur im Wäscher (w) aufweist.

14. Vorrichtung nach Anspruch 11, **dadurch gekennzeichnet, dass** als hydraulische Ausstattungskomponenten an wenigstens eine Pumpe (29), vorzugsweise ein Hochdruckpumpe, angeschlossene Düsenstöcke (28) vorgesehen sind.

15. Vorrichtung nach wenigstens einem der Ansprüche 11 und 14, **dadurch gekennzeichnet, dass** die Siebbleche, Filter und Düsenstücke relativ zu mehreren Rührwerkstufen (26) stationär angeordnet sind.

16. Vorrichtung nach Anspruch 11, **dadurch gekennzeichnet, dass** zwischen dem Schwimm-/Sink-Trenner (T) und dem Intensivwäscher (D) ein einen verweilkreislauf im Schwimm-/Sink-Trenner und gleichzeitig im Intensivwäscher herbeiführender Beipass (11) vorgesehen ist.

17. Vorrichtung nach Anspruch 11, **dadurch gekennzeichnet, dass** dem Intensivwäscher (D) ein Abscheider (E) für die Natronlauge enthaltende Reinigungslösung nachgeschaltet ist.

18. Vorrichtung nach Anspruch 11, **dadurch gekennzeichnet, dass** in der Zuführvorrichtung der Natronlauge enthaltenden Reinigungslösung zum Wäscher (W) ein Versorgungsstrang (21) zumindest vom Abscheider (E) zum wäscher (W) vorgesehen ist, vorzugsweise mit einer versorgungspumpe (40).

19. Vorrichtung nach Anspruch 11, **dadurch gekennzeichnet, dass** die Zuführvorrichtung eine Natronlaugen-Messund Dosiereinheit (F) aufweist, die zumindest an den versorgungsstrang (21), vorzugsweise auch an den Schwimm-/Sink-Trenner (T) angeschlossen ist.

20. Vorrichtung nach Anspruch 19, **dadurch gekennzeichnet, dass** in der Natronlaugen-Mess- und Dosiereinheit (F) eine Vorheizeinrichtung (15) vorgesehen ist.

21. Vorrichtung nach Anspruch 17, **dadurch gekennzeichnet, dass** dem Abscheider (T) ein an Frischwasser und eine Säure- oder CO²-Dosierstation (41, H) angeschlossener Neutralisator (G) nachgeschaltet ist.

22. Vorrichtung nach Anspruch 11, **dadurch gekennzeichnet, dass** der Schwimm-/Sink-Trenner (T) an eine Frischwasserzufuhr (18) angeschlossen ist.

23. Vorrichtung nach Anspruch 11, **dadurch gekennzeichnet, dass** dem Wäscher (W) ein Schwergut-Abscheider (C) vorgeschaltet ist.

24. Vorrichtung nach Anspruch 11, **dadurch gekennzeichnet, dass** der Wäscher (W) mit einer Aufnahme- und Durchsatzkapazität für eine Behandlungszeit > 20 Minuten, vorzugsweise bei etwa 30 Minuten, ausgelegt ist.

## Claims

1. Process for the recycling of at least PET constituents from plastic beverage bottles comminuted to form a particle mixture containing PET flakes, in which the flakes are treated mechanically and simultaneously hydraulically in at least one washer in a cleaning solution containing caustic soda at an elevated temperature in excess of 70°C for more than 20 minutes, **characterised in that** the PET flakes cleaned in the washer are then treated in at least one sink-float separator once again in a cleaning solution containing caustic soda and the PET flakes are washed intensively in at least one intensive washer in a cleaning solution containing caustic soda downstream of the sink-float separator.

2. Process according to claim 1, **characterised in that** the treatment time in the washer is set at approximately 20 to 40 minutes, preferably approximately 30 minutes, and the treatment temperature is set at approximately 75 to 95°C, preferably approximately 80 to 90°C.

3. Process according to claim 1, **characterised in that** the treatment time used for cleaning the PET bottles in, e.g. a conventional cleaning solution containing caustic soda is extended considerably, preferably by up to approximately 50 %, compared to that normally used for cleaning PET bottles, and that the treatment temperature and the concentration of the cleaning solution are increased compared to those normally used for cleaning PET bottles.

4. Process according to claim 1, **characterised in that** mechanical stirring and high-pressure hydraulic spraying are carried out in the washer.

5. Process according to claim 1, **characterised in that** screening and/or filtering is/are carried out in the washer or downstream of the washer.

6. Process according to claim 1, **characterised in that** at least one additive is added to the cleaning solution.

7. Process according to one of claims 1 to 6, **characterised in that** the material to be treated is circulated or at least partially circulated in the sink-float separator and in the downstream intensive washer.

8. Process according to one of claims 1 to 7, **characterised in that** the cleaning solution containing caustic soda is separated from the flakes and recycled after the intensive washing operation.

9. Process according to claim 1, **characterised in that** the concentration of the cleaning solution containing caustic soda is monitored continuously and is adjusted by metered additions.

10. Process according to claim 1, **characterised in that** the washer is heated.

11. Device for the recycling of PET flakes from beverage bottles comminuted to form a particle mixture, comprising a treatment section in which at least one washer having mechanical stirrers is provided for treating the particle mixture with a liquid, a feeding device for a cleaning solution containing caustic soda and a heating device being associated with the washer and at least one sink-float separator (T) operationally coupled with the washer (W) being provided, **characterised in that** the sink-float separator can be operated with the hot cleaning solution containing caustic soda and that at least one intensive washer (D) is arranged downstream of the sink-float separator (T).

12. Device according to claim 11, **characterised in that** screen plates (32, 33, 35) and automatic filters (30) are provided in the washer (W) or in a treatment stage downstream of the washer.

13. Device according to claim 11, **characterised in that** the heating device (P) has at least one heat exchanger (WT) and/or a direct heater, preferably with electropneumatic control for maintaining a treatment temperature of between 70 and 95°C, preferably approximately between 80 and 90°C, in the washer (W).

14. Device according to claim 11, **characterised in that** nozzle assemblies (28) connected to at least one pump (29), preferably a high-pressure pump, are provided as hydraulic components.

15. Device according to at least one of claims 11 and 14, **characterised in that** the screen plates, filters and nozzle assemblies are arranged in such a manner that they are stationary relative to a plurality of stirrer stages (26).

16. Device according to claim 11, **characterised in that** a bypass (11) resulting in a holding circuit in the sink-float separator and simultaneously in the intensive washer is provided between the sink-float separator (T) and the intensive washer (D).

17. Device according to claim 11, **characterised in that** a separator (E) for the cleaning solution containing caustic soda is arranged downstream of the intensive washer (D).

18. Device according to claim 11, **characterised in that** a supply branch (21) extending at least from the separator (E) to the washer (W) and preferably having a supply pump (40) is provided in the device for feeding the cleaning solution containing caustic soda to the washer (W).

19. Device according to claim 11, **characterised in that** the feeding device has a caustic soda measuring and metering unit (F) which is connected at least to the supply branch (21), preferably also to the sink-float separator (T).

20. Device according to claim 19, **characterised in that** a pre-heating device (15) is provided in the caustic soda measuring and metering unit (F).

21. Device according to claim 17, **characterised in that** a neutraliser (G) connected to fresh water and to an acid or CO₂ metering station (41, H) is arranged downstream of the separator (T).

22. Device according to claim 11, **characterised in that** the sink-float separator (T) is connected to a fresh water supply (18).

23. Device according to claim 11, **characterised in that** a heavy material separator (C) is arranged upstream of the washer (W).

24. Device according to claim 11, **characterised in that** the washer (W) is designed with a load and throughput capacity for a treatment time of > 20 minutes, preferably approximately 30 minutes.

## Revendications

1. Procédé de retraitement de composants de PET provenant de bouteilles de boisson en plastique réduites en une quantité de particules contenant des flocons de PET, dans lequel les flocons sont traités mécaniquement et en même temps hydrauliquement dans au moins un laveur à une température supérieure à 70°C et pendant plus de 20 minutes dans une solution de nettoyage contenant une lessive de soude,
**caractérisé en ce que**
les flocons de PET nettoyés dans le laveur sont ensuite traités dans au moins un séparateur flottant/plongeant également dans une solution de nettoyage contenant une lessive de soude et les flocons de PET sont lavés de manière intensive, après le séparateur flottant/plongeant, dans au moins un appareil de lavage intensif dans une solution de nettoyage contenant une lessive de soude.

2. Procédé selon la revendication 1,
**caractérisé en ce que**
le temps de traitement dans le laveur est réglé sur environ 20 à 40 minutes, de préférence environ 30 minutes, et la température de traitement est réglée sur environ 75 à 95 °C, de préférence sur environ 80 à 90°C.

3. Procédé selon la revendication 1,
**caractérisé en ce que**,
pour le nettoyage des bouteilles en PET dans une solution de nettoyage contenant habituellement une lessive de soude, le temps de traitement est considérablement rallongé par rapport à celui du nettoyage des bouteilles PET, de préférence rallongé jusqu'à 50 %, et la température de traitement et la concentration de la solution de nettoyage sont augmentées par rapport à celles du nettoyage des bouteilles PET.

4. Procédé selon la revendication 1,
**caractérisé en ce que**
une agitation mécanique et une pulvérisation hydraulique sous haute pression sont prévues dans le laveur.

5. Procédé selon la revendication 1,
**caractérisé en ce que**
dans le laveur ou en raccordement au laveur sont prévus un tamisage et/ou un filtrage.

6. Procédé selon la revendication 1,
**caractérisé en ce que**
au moins un additif est ajouté à la solution de nettoyage.

7. Procédé selon l'une des revendications 1 à 6,
**caractérisé en ce que**
la matière à traiter est traitée selon un cycle ou au moins selon un cycle partiel dans le séparateur flottant/plongeant et ensuite dans l'appareil de lavage intensif.

8. Procédé selon l'une des revendications 1 à 7,
**caractérisé en ce que**,
après le lavage intensif, la solution de nettoyage contenant la lessive de soude est séparée des flocons puis réduite.

9. Procédé selon la revendication 1,
**caractérisé en ce que**
la concentration de la solution de nettoyage contenant la lessive de soude est surveillée en continu et ajustée par dosage complémentaire.

10. Procédé selon la revendication 1,
**caractérisé en ce que**
le laveur est chauffé.

11. Dispositif de retraitement de flocons de PET provenant de bouteilles de boisson réduites en un mélange de particules, comprenant une partie de traitement selon laquelle au moins un laveur présentant des agitateurs mécaniques est prévu pour traiter le mélange de particules avec un liquide, laveur auquel sont associés un système d'alimentation d'une solution de nettoyage contenant une lessive de soude et un système de chauffage, dans lequel au moins un séparateur flottant/plongeant (T) est prévu et est accouplé au laveur (W) par un procédé de technique de fabrication,
**caractérisé en ce que**
celui-ci peut fonctionner avec la solution de nettoyage chauffée et contenant la lessive de soude et au moins un appareil de lavage intensif (D) est raccordé au séparateur flottant/plongeant (T).

12. Dispositif selon la revendication 11,
**caractérisé en ce que**
dans le laveur (W) ou dans un étage de traitement relié au laveur, des plaques perforées (32, 33, 35) et un filtre automatique (30) sont prévus.

13. Dispositif selon la revendication 11,
**caractérisé en ce que**
le dispositif de chauffage (P) présente au moins un échangeur thermique (WT) et/ou un chauffage direct, de préférence avec un réglage électropneumatique pour maintenir une température de traitement dans le laveur (W) comprise entre 70 et 95°C, de préférence comprise environ entre 80 et 90°C.

14. Dispositif selon la revendication 11
**caractérisé en ce que**
les composants d'équipements hydrauliques prévus sont des éléments d'injection (28) reliés à au moins une pompe (29), de préférence une pompe haute pression.

15. Dispositif selon au moins l'une des revendications 11 et 14,
**caractérisé en ce que**
les plaques perforées, filtres et éléments d'injection sont disposés de manière fixe par rapport à plusieurs étages de l'agitateur (26).

16. Dispositif selon la revendication 11,
**caractérisé en ce que**,
entre le séparateur flottant/plongeant (T) et l'appareil de lavage intensif (D), une dérivation (11) est prévue pour rediriger un cycle se produisant dans le séparateur flottant/plongeant et en même temps dans l'appareil de lavage intensif.

17. Dispositif selon la revendication 11,
**caractérisé en ce que**
un séparateur (E) pour la solution de nettoyage contenant la lessive de soude est raccordé à l'appareil de lavage intensif (D).

18. Dispositif selon la revendication 11,
**caractérisé en ce que**,
dans le dispositif d'alimentation de la solution de nettoyage contenant la lessive de soude vers le laveur (W), une ligne d'approvisionnement (21) est prévue au moins depuis le séparateur (E) vers le laveur (W), de préférence avec une pompe d'approvisionnement (40).

19. Dispositif selon la revendication 11,
**caractérisé en ce que**
le dispositif d'alimentation présente une unité de mesure et de dosage de la lessive de soude (F) qui est raccordée au moins à la ligne d'approvisionnement (21), mais aussi de préférence au séparateur flottant/plongeant (T).

20. Dispositif selon la revendication 19,
**caractérisé en ce que**,
dans l'unité de mesure et de dosage de la lessive de soude (F), il est prévu un système de préchauffage (15).

21. Dispositif selon la revendication 17,
**caractérisé en ce qu'**
un neutralisateur (G) relié à l'eau douce et à une station de dosage en acides ou en CO² (41, H) est raccordé au séparateur (T).

22. Dispositif selon la revendication 11,
**caractérisé en ce que**
le séparateur flottant/plongeant (T) est relié à une alimentation en eau douce (18).

23. Dispositif selon la revendication 11,
**caractérisé en ce qu'**
un séparateur de matières lourdes (C) est raccordé au laveur (W).

24. Dispositif selon la revendication 11,
**caractérisé en ce que**
le laveur (W) est réglé sur une capacité de réception et de débit pour un temps de traitement > 20 minutes, de préférence pour environ 30 minutes.
